# EUROPÄISCHE PATENTANMELDUNG

(11) **EP 3 904 163 A1**
(43) Veröffentlichungstag der Anmeldung: **03.11.2021**
(21) Anmeldenummer: 21167844.6
(22) Anmeldetag: 12.04.2021
(51) Int. Cl.: B60R 16/03, H01M 10/42, H02J 7/00, B60L 58/10

(54) **STEUERUNGSANORDNUNG FÜR EINE HOCHVOLTBATTERIE UND VERFAHREN ZUM BETREIBEN EINER STEUERUNGSANORDNUNG**

(30) Priorität: 14.04.2020 DE 102020110174
(71) Anmelder: VOLKSWAGEN AG, 38440 Wolfsburg (DE)
(72) Erfinder: Quantmeyer, Florian, 38302 Wolfenbüttel (DE); Findeisen, Michael, 38162 Cremlingen (DE)
(74) Vertreter: karo IP

(57) **Zusammenfassung**

Steuerungsanordnung (1) für eine Hochvoltbatterie (2) in einem Kraftfahrzeug (3), zumindest umfassend eine Hochvoltbatterie (2) sowie ein Steuergerät (4) für die Hochvoltbatterie (2); wobei die Hochvoltbatterie (2) über eine schaltbare elektrische erste Verbindung (5) mit einem elektrischen Zwischenkreis (6) des Kraftfahrzeugs (2) und über eine schaltbare elektrische zweite Verbindung (7) mit dem Steuergerät (4) verbunden ist; wobei die Steuerungsanordnung (1) eine Schaltanordnung (8) aufweist, durch die die erste Verbindung (5) und die zweite Verbindung (7) schaltbar sind, so dass in einem ersten Zustand (9) der Schaltanordnung (1) die Hochvoltbatterie (2) mit dem Zwischenkreis (6) und das Steuergerät (4) mit der Hochvoltbatterie (2) verbunden sind; wobei in einem zweiten Zustand (10) die Hochvoltbatterie (2) von dem Zwischenkreis (6) getrennt ist und in einem dritten Zustand (11) das Steuergerät (4) von der Hochvoltbatterie (2) getrennt und mit dem Zwischenkreis (6) verbunden ist.

## Beschreibung

Die Erfindung betrifft eine Steuerungsanordnung für eine Hochvoltbatterie und ein Verfahren zum Betreiben einer Steuerungsanordnung für eine Hochvoltbatterie. Die Steuerungsanordnung und die Hochvoltbatterie sind insbesondere zum Einsatz in einem Kraftfahrzeug vorgesehen und werden bevorzugt darin angeordnet.

Eine Hochvoltbatterie in einem Kraftfahrzeug mit z. B. einer 48 Volt Versorgungsspannung verfügt insbesondere über ein Steuergerät (ein Batteriemanagementsystem - BMS), welches seine Spannungsversorgung aus der 48 Volt Versorgungsspannung bezieht, d. h. das BMS wird aus den Batteriezellen der Hochvoltbatterie selbst versorgt. Eine Ruhestromaufnahme des BMS ist sehr gering, so dass auch sehr lange Standphasen in der Regel unproblematisch sind. Wird jedoch eine definierte Zeitdauer überschritten oder liegt ein Fehler des 48 Volt-Systems vor, kann es zu einer Entladung der Hochvoltbatterie kommen.

Unterschreitet die Hochvoltbatterie dabei einen definierten Grenzwert einer elektrischen Spannung, nehmen die Batteriezellen einen irreversiblen Schaden und die Hochvoltbatterie ist defekt. Sinkt die elektrische Spannung noch weiter ab, kann das BMS nicht mehr mit elektrischer Energie versorgt werden. In diesem Fall ist weder eine Kommunikation über kraftfahrzeugexterne Servicegeräte (z. B. Diagnosetester) noch über CAN (Controller Area Network, ein Bussystem) mit dem Kraftfahrzeug möglich.

Daraus resultieren mehrere Probleme. Zum einen ist die Hochvoltbatterie irreversibel zerstört, so dass hohe Reparaturkosten auftreten. Zum anderen ist eine Diagnose von internen Fehlern der Hochvoltbatterie, die ebenfalls zur Entladung geführt haben könnten, nicht möglich. Es kann nicht zwischen einer Tiefentladung der Hochvoltbatterie und einem Steuergerätedefekt (z. B. defekter Controller oder CAN-Transceiver) unterschieden werden. Da insbesondere Lithium-Ionen-Batterien als Gefahrgut zu handhaben sind, gelten definierte Bestimmungen für den Umgang mit diesen Bauteilen. Unter anderem erfolgt nach VDA-Richtlinie eine Klassifizierung von Energiespeichern (Batterien) für Transport und Lagerung. Voraussetzung hierfür ist unter anderem den Zustand des Energiespeichers festzustellen, wofür die Kommunikation unerlässlich ist. Kann die Klassifizierung nicht erfolgen, ist der Energiespeicher als defekt (kritisch) zu handhaben und Sonderprozesse einzuleiten (Transport in Standardverpackung nicht mehr möglich, Lagerung in Quarantänebehälter etc.). Damit entstehen unter Umständen Zusatzkosten.

Es ist bekannt, Hochvoltbatterien mit einer Isolierung zwischen der Batteriespannung der Hochvoltbatterie und der Spannungsversorgung des Steuergeräts (BMS) auszuführen. Dies ist aus Sicherheitsgründen (hohe Spannungslage der Hochvoltbatterie) notwendig. Diese Technik wurde insbesondere auf alle bekannten 48 Volt Batterien angewendet. Die Versorgung des BMS erfolgt somit über eine 12 Volt Spannungsversorgung im Kraftfahrzeug. Das eingangs skizzierte Problem besteht dabei nicht.

Die Kosten für die Isolierung der unterschiedlichen Versorgungsspannungen erhöhen die Einzelkosten der Hochvoltbatterie. Weiter ist die Energieversorgungssicherheit geringer, da in der Regel ein Hochvolt-Schütz sowie das BMS über die 12 Volt Spannungsversorgung und nicht über die 48 Volt Spannungsversorgung der Hochvoltbatterie versorgt werden.

Aus der DE 10 2017 222 544 A1 sind eine Mehrspannungsbatterievorrichtung und ein Bordnetz für ein Kraftfahrzeug bekannt.

Die DE 10 2014 201 059 A1 ist auf eine Versorgungsschaltung zur redundanten Versorgung einer Batteriesteuerung gerichtet.

Aufgabe der vorliegenden Erfindung ist es, die mit Bezug auf den Stand der Technik angeführten Probleme zumindest teilweise zu lösen. Insbesondere soll eine Steuerungsanordnung für eine Hochvoltbatterie vorgeschlagen werden, durch die einerseits eine hohe Sicherheit hinsichtlich der Energieversorgung für ein Steuergerät der Steuerungsanordnung gewährleistet werden kann und durch die andererseits ein Status der Hochvoltbatterie sicher ermittelbar ist. Weiter soll ein Verfahren zum Betreiben einer derartigen Steuerungsanordnung vorgeschlagen werden.

Zur Lösung dieser Aufgaben trägt eine Steuerungsanordnung mit den Merkmalen gemäß Patentanspruch 1 sowie ein Verfahren mit den Merkmalen gemäß Patentanspruch 4 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Steuerungsanordnung für eine Hochvoltbatterie in einem Kraftfahrzeug vorgeschlagen. Die Hochvoltbatterie ist insbesondere für den Einsatz in einem Kraftfahrzeug eingerichtet. Die Steuerungsanordnung umfasst zumindest eine Hochvoltbatterie sowie ein Steuergerät für die Hochvoltbatterie. Die Hochvoltbatterie ist über eine schaltbare elektrische erste Verbindung mit einem elektrischen Zwischenkreis des Kraftfahrzeugs und über eine schaltbare elektrische zweite Verbindung mit dem Steuergerät verbunden. Die Steuerungsanordnung weist eine Schaltanordnung auf, durch die die erste Verbindung und die zweite Verbindung schaltbar sind, so dass in einem ersten Zustand der Schaltanordnung die Hochvoltbatterie mit dem Zwischenkreis und das Steuergerät mit der Hochvoltbatterie verbunden sind. In einem zweiten Zustand ist die Hochvoltbatterie von dem Zwischenkreis getrennt (und das Steuergerät weiter mit der Hochvoltbatterie verbunden) und in einem dritten Zustand ist das Steuergerät von der Hochvoltbatterie getrennt und mit dem Zwischenkreis verbunden.

Die Hochvoltbatterie ist zur Bereitstellung einer ersten Versorgungsspannung von mindestens 30 Volt, insbesondere mindestens 40 Volt, bevorzugt mindestens 45 Volt, geeignet ausgeführt. Insbesondere beträgt die erste Versorgungsspannung 48 Volt.

Das Steuergerät ist in der Steuerungsanordnung mit der Hochvoltbatterie zur Bereitstellung einer elektrischen Versorgungsspannung verbunden, wenn die Hochvoltbatterie eine ausreichende Energie zum Betreiben des Steuergeräts bereitstellen kann. Das heißt insbesondere, dass in dem Kraftfahrzeug keine weitere Batterie vorgesehen ist, über die das Steuergerät mit einer Versorgungsspannung versorgt wird.

Die Hochvoltbatterie ist insbesondere einerseits mit einer elektrischen Masse verbunden. Als Masse wird ein leitender Körper bezeichnet, dem im Regelfall das Potential null zugeordnet wird, welches insbesondere das Bezugspotential für alle Signal- und Betriebs-/Versorgungsspannungen der Steuerungsanordnung darstellt.

Die Hochvoltbatterie ist andererseits über die erste Verbindung mit dem Zwischenkreis bzw. mit Verbrauchern des Kraftfahrzeugs verbindbar, bzw. bei Anordnung der Steuerungsanordnung in einem Kraftfahrzeug mit diesem Kraftfahrzeug verbindbar. Verbraucher des Kraftfahrzeuges werden also über die erste Verbindung mit der Hochvoltbatterie elektrisch leitend verbunden.

Das Steuergerät ist insbesondere einerseits mit Masse verbunden. Andererseits ist das Steuergerät über die zweite Verbindung mit der Hochvoltbatterie verbunden. Die erste Verbindung kann durch das Steuergerät getrennt oder, ggf. wieder, hergestellt werden. Dazu ist insbesondere ein zweiter Schalter, z. B. ein bi-stabiles Relais, vorgesehen, dass durch das Steuergerät ansteuerbar ist.

Ein bi-stabiles Relais kann im stromlosen Zustand zwei verschiedene stabile Schaltzustände einnehmen.

Insbesondere kann der zweite Schalter auch bei fehlender Versorgungsspannung eine Trennung der ersten Verbindung aufrechterhalten. D. h., wenn die Hochvoltbatterie keine ausreichende Versorgungsspannung bereitstellen kann, trennt der zweite Schalter die Hochvoltbatterie von dem Zwischenkreis.

Insbesondere kann die erste Verbindung ausschließlich durch das Steuergerät getrennt oder, ggf. wieder, hergestellt werden. Insbesondere wird der zweite Schalter also ausschließlich durch das Steuergerät betätigt.

Die Steuerungsanordnung bzw. Schaltanordnung kann so ausgeführt sein, dass diese nur genau die drei angegebenen Zustände zulässt.

Insbesondere ist das Steuergerät über einen ersten Spannungswandler mit der Hochvoltbatterie verbunden. Eine durch den ersten Spannungswandler erzeugte zweite Versorgungsspannung ist geringer als eine erste Versorgungsspannung, die durch die Hochvoltbatterie für den ersten Spannungswandler und den Zwischenkreis bereitgestellt ist. In dem dritten Zustand ist das Steuergerät über den ersten Spannungswandler mit dem Zwischenkreis verbunden.

Insbesondere sind in einem ersten Zustand der Schaltanordnung die Hochvoltbatterie mit dem Zwischenkreis und das Steuergerät mit der Hochvoltbatterie verbunden. In einem zweiten Zustand ist die Hochvoltbatterie von dem Zwischenkreis getrennt und das Steuergerät mit der Hochvoltbatterie verbunden. In einem dritten Zustand ist die Hochvoltbatterie von dem Zwischenkreis und dem Steuergerät getrennt und das Steuergerät mit dem Zwischenkreis verbunden.

Der erste Spannungswandler ist insbesondere zwischen der Hochvoltbatterie und dem Steuergerät angeordnet.

Insbesondere beträgt die zweite Versorgungsspannung höchstens 50 % der ersten Versorgungsspannung. Insbesondere beträgt die zweite Versorgungsspannung höchstens 20 Volt, bevorzugt höchstens 15 Volt. Insbesondere beträgt die zweite Versorgungsspannung 12 Volt.

Bevorzugt beträgt die zweite Versorgungsspannung höchstens 10 Volt, insbesondere höchstens oder genau 5 Volt oder 3,3 Volt.

Insbesondere weist die Schalteranordnung einen ersten Schalter auf, durch den das Steuergerät entweder mit der Hochvoltbatterie oder mit dem Zwischenkreis verbindbar ist. Der zweite Schalter kann insbesondere den Zwischenkreis von der Hochvoltbatterie, nicht aber die Hochvoltbatterie von dem Steuergerät trennen.

Insbesondere ist der erste Schalter ein bi-stabiles Relais, das im stromlosen Zustand zwei verschiedene stabile Schaltzustände einnehmen kann. Insbesondere kann der erste Schalter bei fehlender Versorgungsspannung durch die Hochvoltbatterie eine Trennung der zweiten Verbindung erwirken. Insbesondere verbindet der erste Schalter dann, wenn die zweite Verbindung getrennt ist, das Steuergerät mit dem Zwischenkreis.

Insbesondere kann die zweite Verbindung ausschließlich durch das Steuergerät wieder hergestellt werden. Insbesondere wird der erste Schalter also ausschließlich durch das Steuergerät betätigt.

Das Steuergerät umfasst insbesondere einen System-Basis-Chip. Eine Kommunikation der Steuerungsanordnung mit dem Kraftfahrzeug erfolgt insbesondere über den System-Basis-Chip, z. B. über CAN. Der System-Basis-Chip weist insbesondere LDO (low dropout) -Regler auf. LDO-Regler können insbesondere eine Ausgangsspannung regeln, wenn diese sehr ähnlich einer Eingangsspannung ist. Über die LDO-Regler kann ein Mikrocontroller des Steuergeräts über eine dritte Verbindung mit einer vierten Versorgungsspannung betrieben werden.

Das Steuergerät umfasst insbesondere einen Mikrocontroller. Der Mikrocontroller ist insbesondere mit einer vierten Versorgungsspannung betreibbar. Die vierte Versorgungsspannung beträgt insbesondere höchstens 50 % der zweiten Versorgungsspannung, z. B. 3,3 Volt oder 5 Volt.

Der Mikrocontroller ist insbesondere das Kernbauteil des Steuergeräts und steuert insbesondere alle Abläufe innerhalb des Steuergeräts. Insbesondere ist der Microcontroller über einen Kommunikationskanal mit einem Analog-Frontend verbunden. Über einen Analog-Frontend werden insbesondere Zellspannungen sowie Packspannung und Packstrom der Hochvoltbatterie erfasst.

Ein Analog-Frontend ist insbesondere ein Schaltkreis zur Wandlung und Bearbeitung analoger Signale in digitale Signale. Über das Analog-Frontend werden insbesondere analoge Signale der Hochvoltbatterie erfasst und als digitale Signale an den Mikrocontroller übermittelt.

Über den Mikrocontroller ist insbesondere die Schaltanordnung betätigbar. Insbesondere sind damit die erste Verbindung und die zweite Verbindung, insbesondere unabhängig voneinander, durch die Betätigung des zweiten Schalters bzw. des ersten Schalters, wiederherstellbar bzw. der die erste Verbindung schaltende zweite Schalter und der die zweite Verbindung schaltende erste Schalter ansteuerbar bzw. betätigbar.

Über das Steuergerät bzw. den Mikrocontroller kann im Betrieb der Hochvoltbatterie insbesondere kontinuierlich ein aktueller Ladezustand der Hochvoltbatterie ermittelt werden. Diese Ermittlung bzw. Erfassung kann anhand bekannter Verfahren erfolgen, z. B. Ruhespannungsmessung und Stromintegration und/oder über komplexe Zellmodelle.

Über das Steuergerät bzw. den Mikrocontroller kann insbesondere erfasst werden, wenn Grenzwerte des Ladezustands unterschritten und/oder überschritten werden.

Insbesondere kann durch das Steuergerät, bei Verlassen eines für den normalen Betrieb der Hochvoltbatterie vorgesehenen Ladezustandsbereichs (SOC-Betriebsbereich; state of charge-Betriebsbereich), eine Warnung an das Kraftfahrzeug übertragen werden, z. B. über CAN. Zusätzlich oder alternativ kann ein Fehlereintrag z. B. in dem Steuergerät erfolgen, insbesondere in einem nichtflüchtigen Speicher des Steuergeräts.

Über die Steuerungsanordnung wird einerseits sichergestellt, dass bei ausreichender Energieversorgung durch die Hochvoltbatterie das Steuergerät mit der Hochvoltbatterie verbunden ist. Dabei kann die Hochvoltbatterie bei Unterschreiten eines ersten Grenzwerts des Ladezustands der Hochvoltbatterie durch das Steuergerät von dem Zwischenkreis getrennt werden.

Weiter kann durch die Steuerungsanordnung sichergestellt werden, dass das Steuergerät bei Unterschreiten eines zweiten Grenzwerts des Ladezustands der Hochvoltbatterie ebenfalls von der Hochvoltbatterie getrennt wird. Dabei wird das Steuergerät mit dem Zwischenkreis verbunden, so dass das Steuergerät z. B. von einem in dem Zwischenkreis angeordneten Starter-Generator, insbesondere einem Riemen-Starter-Generator, mit einer ausreichenden Versorgungsspannung betrieben werden kann.

Es wird weiter ein Verfahren zum Betreiben einer Steuerungsanordnung für eine Hochvoltbatterie vorgeschlagen. Die Hochvoltbatterie ist insbesondere für den Einsatz in einem Kraftfahrzeug vorgesehen. Das Verfahren wird insbesondere durchgeführt, wenn die Hochvoltbatterie in dem Kraftfahrzeug angeordnet ist. Das Verfahren dient insbesondere zum Betreiben der beschriebenen Steuerungsanordnung.

Die Steuerungsanordnung umfasst zumindest eine Hochvoltbatterie sowie ein Steuergerät für die Hochvoltbatterie. Die Hochvoltbatterie ist über eine schaltbare elektrische erste Verbindung mit einem elektrischen Zwischenkreis des Kraftfahrzeugs und über eine schaltbare elektrische zweite Verbindung mit dem Steuergerät verbunden. Die Steuerungsanordnung weist eine Schaltanordnung auf, durch die die erste Verbindung und die zweite Verbindung schaltbar sind, so dass in einem ersten Zustand der Schaltanordnung die Hochvoltbatterie mit dem Zwischenkreis und das Steuergerät mit der Hochvoltbatterie verbunden sind. In einem zweiten Zustand ist die Hochvoltbatterie von dem Zwischenkreis getrennt (und weiter mit dem Steuergerät verbunden) und in einem dritten Zustand ist (auch) das Steuergerät von der Hochvoltbatterie getrennt und mit dem Zwischenkreis verbunden. Das Verfahren umfasst ausgehend von dem ersten Zustand der Schaltanordnung zumindest die folgenden Schritte:
a) Ermitteln eines aktuellen Ladezustands der Hochvoltbatterie durch das Steuergerät; und, wenn der aktuelle Ladezustand einen Grenzwert unterschreitet
b) Herstellen des dritten Zustands.

Die obige, nicht abschließende, Einteilung der Verfahrensschritte in a) und b) soll vorrangig nur zur Unterscheidung dienen und keine Reihenfolge und/oder Abhängigkeit erzwingen. Auch die Häufigkeit der Verfahrensschritte z. B. während der Einrichtung und/oder des Betriebes des Systems kann variieren. Ebenso ist möglich, dass Verfahrensschritte einander zumindest teilweise zeitlich überlagern. Ganz besonders bevorzugt findet Verfahrensschritt a) kontinuierlich statt. Insbesondere werden die Schritte a) und b) in der angeführten Reihenfolge durchgeführt.

Insbesondere werden vor Schritt b) die folgenden Schritte durchgeführt:
i. Durchführen von Schritt a) und,
   wenn der aktuelle Ladezustand einen ersten Grenzwert unterschreitet
ii. Herstellen des zweiten Zustands, und
iii. Durchführen von Schritt a) und,
   wenn der aktuelle Ladezustand einen zweiten Grenzwert unterschreitet
iv. Durchführen von Schritt b).

Die erste Verbindung kann durch das Steuergerät getrennt oder, ggf. wieder, hergestellt werden. Dazu ist insbesondere ein zweiter Schalter, z. B. ein bi-stabiles Relais, vorgesehen, das durch das Steuergerät ansteuerbar ist.

Insbesondere kann der zweite Schalter auch bei fehlender Versorgungsspannung eine Trennung der ersten Verbindung aufrechterhalten. D. h. wenn die Hochvoltbatterie keine ausreichende Versorgungsspannung bereitstellen kann, trennt der zweite Schalter die Hochvoltbatterie von dem Zwischenkreis.

Insbesondere kann die erste Verbindung ausschließlich durch das Steuergerät getrennt oder, ggf. wieder, hergestellt werden. Insbesondere wird der zweite Schalter also ausschließlich durch das Steuergerät betätigt.

Insbesondere weist die Schalteranordnung einen ersten Schalter auf, durch den das Steuergerät entweder mit der Hochvoltbatterie oder mit dem Zwischenkreis verbindbar ist. Der zweite Schalter kann insbesondere den Zwischenkreis von der Hochvoltbatterie, nicht aber die Hochvoltbatterie von dem Steuergerät trennen.

Insbesondere wird Schritt a) kontinuierlich zumindest bis zur Durchführung von Schritt b) durchgeführt. Insbesondere werden die Schritte i. bis iv. in der angeführten Reihenfolge durchgeführt.

Insbesondere ist der zweite Grenzwert geringer als der erste Grenzwert. Insbesondere erfolgt das Verfahren während einer Abnahme des Ladezustands der Hochvoltbatterie.

Insbesondere soll durch das Verfahren die Hochvoltbatterie geschützt werden.

Insbesondere erfolgt gemäß Schritt ii. ein Trennen der ersten Verbindung. Damit kann erreicht werden, dass die erste Verbindung, zwischen der Hochvoltbatterie und dem Zwischenkreis und insbesondere den in dem Kraftfahrzeug angeordneten Verbrauchern, unterbrochen wird, so dass die Hochvoltbatterie über das Kraftfahrzeug nicht weiter entladen wird.

Der erste Grenzwert beträgt insbesondere zwischen 10 und 20 %, bevorzugt 15 %, eines Nennladezustands, also einer Nennladekapazität der Hochvoltbatterie. Der übliche Betriebsbereich für die Hochvoltbatterie im Einsatz im Kraftfahrzeug umfasst insbesondere einen Ladezustand zwischen 30 und 100 % eines Nennladezustands.

Der zweite Grenzwert beträgt insbesondere weniger als 12 %, bevorzugt 10 %, eines Nennladezustands.

Nach Schritt ii. ist die Hochvoltbatterie insbesondere nur noch mit dem Steuergerät verbunden. Das Steuergerät weist insbesondere einen wesentlich geringeren Energiebedarf als das Kraftfahrzeug auf. Insbesondere ist das Kraftfahrzeug weiter mit dem Steuergerät verbunden bzw. kann mit dem Steuergerät weiter kommunizieren, z. B. über CAN.

Wird ein zweiter Grenzwert unterschritten, wird auch die zweite Verbindung getrennt, d. h. auch das Steuergerät wird von der Hochvoltbatterie getrennt. Damit sind nach Schritt b) insbesondere keine Verbraucher mehr an die Hochvoltbatterie angeschlossen.

Insbesondere wird unmittelbar vor Schritt b) in einem nichtflüchtigen Speicher des Steuergeräts ein Statussignal gesetzt. Durch das Statussignal wird der Status der Hochvoltbatterie in dem Steuergerät hinterlegt, so dass dieser Status aus dem Steuergerät ausgelesen werden kann, z. B. über einen Servicestecker bzw. ein kraftfahrzeugexternes Servicegerät. Alternativ oder zusätzlich kann ein Statussignal über CAN an eine zentrale Steuerungseinheit übermittelt werden. Mit dem Hinterlegen bzw. Übermitteln des Statussignals kann eine Fehlerdiagnose der Hochvoltbatterie auch nach einer völligen Entladung und/oder Schädigung der Hochvoltbatterie erfolgen.

Nach Schritt b) wird das Steuergerät nicht mehr über die Hochvoltbatterie mit einer Spannung versorgt, so dass die Hochvoltbatterie nicht weiter durch interne Elektronik der Steuerungsanordnung entladen wird. Die Hochvoltbatterie kann sich insbesondere dann nur selbst entladen, wobei sich eine Selbstentladung z. B. im Bereich von höchstens 2 % des Nennladezustands pro Monat bewegt.

Die Steuerungsanordnung stellt insbesondere sicher, dass das Steuergerät bei Unterschreiten eines zweiten Grenzwerts des Ladezustands der Hochvoltbatterie von der Hochvoltbatterie getrennt und mit dem Zwischenkreis verbunden wird. Insbesondere kann so das Steuergerät z. B. von einem in dem Zwischenkreis angeordneten Starter-Generator mit einer ausreichenden Versorgungsspannung betrieben werden.

Insbesondere wird nach der Durchführung von Schritt b) und nach einem Inbetriebnehmen des Kraftfahrzeugs der Zwischenkreis über das Kraftfahrzeug mit einer dritten Versorgungsspannung beaufschlagt.

Das Inbetriebnehmen des Kraftfahrzeuges umfasst z. B. ein Einschalten der Zündung. Insbesondere wird dabei eine zentrale Steuerungseinheit geweckt und kann feststellen, dass die Hochvoltbatterie nicht mehr mit der zentralen Steuerungseinheit, z. B. über CAN, kommuniziert.

Insbesondere wird durch die zentrale Steuerungseinheit eine Vorladung des Zwischenkreises auf einen definierten Spannungswert durch einen zweiten Spannungswandler, der in dem Zwischenkreis angeordnet ist, initialisiert. Über die Verbindung mit dem Zwischenkreis kann so das Steuergerät mit einer dritten Versorgungsspannung beaufschlagt werden. Die dritte Versorgungsspannung beaufschlagt insbesondere den ersten Spannungswandler, der das Steuergerät dann mit der zweiten Versorgungsspannung beaufschlagt. Die dritte Versorgungsspannung entspricht hinsichtlich der Spannungswerte insbesondere der ersten Versorgungsspannung.

Die Beaufschlagung des Steuergeräts mit der Versorgungsspannung aus dem Zwischenkreis ermöglicht die Wiederaufnahme der Kommunikation des Steuergeräts mit der zentralen Steuerungseinheit. Damit können die Informationen der Hochvoltbatterie an die zentrale Steuerungseinheit übermittelt werden.

Über das Inbetriebnehmen des Kraftfahrzeuges wird z. B. ein Starter-Generator, insbesondere ein Riemen-Starter-Generator betrieben, über den die dritte Versorgungsspannung erzeugt werden kann.

Über die Wiederaufnahme der Kommunikation des Steuergeräts mit der zentralen Steuerungseinheit kann der zweite Spannungswandler zur Regelung der dritten Versorgungsspannung eingestellt werden, so dass die dritte Versorgungsspannung im Zwischenkreis auf die erste Versorgungsspannung der Hochvoltbatterie geregelt wird. Nach dem Angleichen der dritten Versorgungsspannung und der ersten Versorgungsspannung kann die erste Verbindung wieder geschlossen werden, so dass die Hochvoltbatterie mit dem Zwischenkreis verbunden wird.

Insbesondere wird die Schaltanordnung über das Steuergerät betätigt und die Hochvoltbatterie mit dem Zwischenkreis über die erste Verbindung verbunden. Der Steuerbefehl für die Betätigung der Schaltanordnung wird also insbesondere über das Steuergerät bzw. den Microcontroller ausgelöst.

Insbesondere wird eine im Zwischenkreis vorliegende dritte Versorgungsspannung, vor dem Verbinden der Hochvoltbatterie mit dem Zwischenkreis, auf eine erste Versorgungsspannung der Hochvoltbatterie geregelt.

Insbesondere erfolgt nach dem Herstellen der ersten Verbindung ein Laden der Hochvoltbatterie über den Zwischenkreis.

Über das Steuergerät kann insbesondere ein aktueller Ladezustand hergeleitet werden, z. B. anhand des zuletzt hinterlegten Statussignals und unter Berücksichtigung der Selbstentladung der Hochvoltbatterie. Wenn über das Steuergerät festgestellt wird, dass der Ladezustand einen dritten Grenzwert unterschreitet, wird ein Herstellen der ersten Verbindung verhindert.

Eine Unterschreitung des dritten Grenzwerts deutet insbesondere darauf hin, dass die Hochvoltbatterie zumindest teilweise geschädigt ist, ggf. irreversibel, so dass ein Herstellen der ersten Verbindung dann verhindert wird. Das in dem Steuergerät insbesondere bereits hinterlegte Statussignal ermöglicht eine Diagnose des Fehlers der Hochvoltbatterie.

Der dritte Grenzwert beträgt insbesondere höchstens 0,5 %, bevorzugt 0 %, eines Nennladezustands.

Insbesondere wird nach Schritt b) das Steuergerät mit der Hochvoltbatterie über die zweite Verbindung erst dann wieder verbunden, wenn die Hochvoltbatterie einen Ladezustand erreicht, der einen vierten Grenzwert überschreitet. Die zweite Verbindung, also die Verbindung zwischen der Hochvoltbatterie und dem Steuergerät, also der erste Zustand, wird also erst dann wieder hergestellt, wenn die Hochvoltbatterie einen ausreichenden Ladezustand erreicht, der die Versorgung des Steuergeräts mit der ersten Versorgungsspannung gewährleisten kann. Die zweite Verbindung wird insbesondere durch das Steuergerät wieder hergestellt.

Der vierte Grenzwert liegt insbesondere zwischen dem dritten Grenzwert und dem zweiten Grenzwert oder zwischen dem zweiten Grenzwert und dem ersten Grenzwert.

Mit dem Verfahren bzw. mit der Steuerungsanordnung kann einerseits die Hochvoltbatterie vor einer Tiefenentladung geschützt werden, da über die Schaltanordnung die Hochvoltbatterie von allen Verbrauchern, inklusive dem Steuergerät der Hochvoltbatterie getrennt werden kann. Weiter kann die Hochvoltbatterie und das Steuergerät nach einer derartigen Trennung automatisch wieder reaktiviert werden. Die Reaktivierung erfolgt über eine Inbetriebnahme des Zwischenkreises bzw. des Kraftfahrzeuges. Dabei wird zunächst das Steuergerät reaktiviert und der Ladezustand der Hochvoltbatterie abgefragt bzw. ermittelt. Erst danach wird die Hochvoltbatterie mit dem Zwischenkreis verbunden und ggf. geladen. Ist ein ausreichender Ladezustand der Hochvoltbatterie erreicht, kann das Steuergerät wieder mit der Hochvoltbatterie verbunden werden, so dass das Steuergerät, insbesondere ausschließlich, von der Hochvoltbatterie mit einer ersten Versorgungsspannung beaufschlagt wird.

Insbesondere ist das Steuergerät der Steuerungsanordnung und insbesondere die zentrale Steuerungseinheit zur Durchführung des beschriebenen Verfahrens ausgestattet, konfiguriert oder programmiert.

Weiter kann das Verfahren auch von einem Computer bzw. mit einem Prozessor eines Steuergeräts ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens durchführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Die Ausführungen zu dem Verfahren sind insbesondere auf die Steuerungsanordnung oder das computerimplementierte Verfahren (also den Computer bzw. den Prozessor, das System zur Datenverarbeitung, das computerlesbare Speichermedium) übertragbar und umgekehrt.

Insbesondere kann die Hochvoltbatterie auch autark (also ohne Kraftfahrzeug bzw. nicht in einem Kraftfahrzeug verbaut) betrieben werden, wobei die Hochvoltbatterie bzw. die vorgeschlagene Steuerungsanordnung keine weitere Spannungsversorgung bzw. Spannungsquelle und/oder keine Isolierung zwischen Versorgungsspannung der Hochvoltbatterie und einer Versorgungsspannung des Steuergeräts aufweist.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein Kraftfahrzeug; und
- Fig. 2:: eine Steuerungsanordnung des Kraftfahrzeuges.

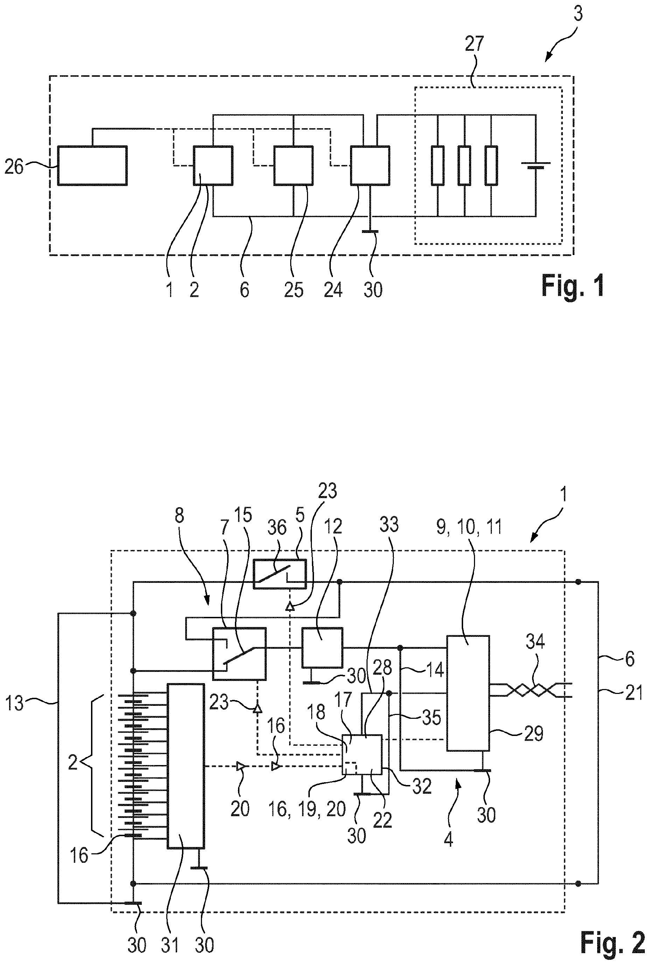

Fig. 1 zeigt ein Kraftfahrzeug 3. Fig. 2 zeigt eine Steuerungsanordnung 1 des Kraftfahrzeuges 3. Die Fig. 1 und 2 werden im Folgenden gemeinsam beschrieben.

Das Kraftfahrzeug 3 umfasst eine Hochvoltbatterie 2 mit einer Steuerungsanordnung 1, einen Riemen-Starter-Generator 25, einen zweiten Spannungswandler 24, ein 12-Volt-Teilnetz 27 sowie eine zentrale Steuerungseinheit 26. Die Hochvoltbatterie 2 und die Steuerungsanordnung 1 sind über den Zwischenkreis 6 mit dem zweiten Spannungswandler 24 und dem Riemen-Starter-Generator 25 verbunden. Die Hochvoltbatterie 2 kann über den Zwischenkreis durch den Riemen-Starter-Generator 25 aufgeladen werden. Die Hochvoltbatterie 2 kann nicht mit dem 12-Volt-Teilnetz 27 verbunden werden.

Die Steuerungsanordnung 1 umfasst eine Hochvoltbatterie 2 sowie ein Steuergerät 4 für die Hochvoltbatterie 2. Die Hochvoltbatterie 2 ist über eine schaltbare elektrische erste Verbindung 5 mit dem elektrischen Zwischenkreis 6 des Kraftfahrzeugs 3 und über eine schaltbare elektrische zweite Verbindung 7 mit dem Steuergerät 4 verbunden. Die Steuerungsanordnung 1 weist eine Schaltanordnung 8 auf, durch die die erste Verbindung 5 und die zweite Verbindung 7 schaltbar sind, so dass in einem ersten Zustand 9 der Schaltanordnung 8 die Hochvoltbatterie 2 mit dem Zwischenkreis 6 und das Steuergerät 4 mit der Hochvoltbatterie 2 verbunden sind. In einem zweiten Zustand 10 ist die Hochvoltbatterie 2 von dem Zwischenkreis 6 getrennt und in einem dritten Zustand 11 ist das Steuergerät 4 von der Hochvoltbatterie 2 getrennt und mit dem Zwischenkreis 6 verbunden.

Das Steuergerät 4 ist in der Steuerungsanordnung 1 mit der Hochvoltbatterie 2 zur Bereitstellung einer ersten Versorgungsspannung 13 verbunden, wenn die Hochvoltbatterie 2 eine ausreichende Energie zum Betreiben des Steuergeräts 4 bereitstellen kann. Das heißt, dass in dem Kraftfahrzeug 3 keine weitere Batterie vorgesehen ist, über die das Steuergerät 4 mit einer Versorgungsspannung versorgt wird.

Die Hochvoltbatterie 2 ist einerseits mit Masse 30 verbunden. Die Hochvoltbatterie 2 ist andererseits über die erste Verbindung 5 mit dem Zwischenkreis 6 bzw. mit Verbrauchern des Kraftfahrzeug 3 verbindbar. Verbraucher des Kraftfahrzeuges 3 werden also über die erste Verbindung 5 mit der Hochvoltbatterie 2 elektrisch leitend verbunden.

Das Steuergerät 4 ist einerseits mit Masse 30 verbunden. Andererseits ist das Steuergerät 4 über die zweite Verbindung 7 mit der Hochvoltbatterie 2 verbunden. Die erste Verbindung 5 kann durch das Steuergerät 4 getrennt oder, ggf. wieder, hergestellt werden. Dazu ist ein zweiter Schalter 36, z. B. ein bi-stabiles Relais, vorgesehen, dass durch das Steuergerät 4 über einen Steuerbefehl 23 ansteuerbar ist.

Der zweite Schalter 36 kann auch bei fehlender erster Versorgungsspannung 13 eine Trennung der ersten Verbindung 5 aufrechterhalten. D. h. wenn die Hochvoltbatterie 2 keine ausreichende erste Versorgungsspannung 13 bereitstellen kann, trennt der zweite Schalter 36 die Hochvoltbatterie 2 von dem Zwischenkreis 6.

Die erste Verbindung 5 kann ausschließlich durch das Steuergerät 4 getrennt oder, ggf. wieder, hergestellt werden. Der zweite Schalter 36 wird also ausschließlich durch das Steuergerät 4 betätigt.

Das Steuergerät 4 ist über einen ersten Spannungswandler 12 mit der Hochvoltbatterie 2 verbunden. Eine durch den ersten Spannungswandler 12 erzeugte zweite Versorgungsspannung 14 ist geringer als eine erste Versorgungsspannung 13, die durch die Hochvoltbatterie 2 für den ersten Spannungswandler 12 und den Zwischenkreis 6 bereitgestellt ist. In dem dritten Zustand 11 ist das Steuergerät 4 über den ersten Spannungswandler 12 mit dem Zwischenkreis 6 verbunden.

Der erste Spannungswandler 12 ist zwischen der Hochvoltbatterie 2 und dem Steuergerät 4 angeordnet.

Die Schalteranordnung 8 weist einen ersten Schalter 15 auf, durch den das Steuergerät 4 entweder mit der Hochvoltbatterie 2 oder mit dem Zwischenkreis 6 verbindbar ist. Der zweite Schalter 36 kann nur den Zwischenkreis 6 von der Hochvoltbatterie 2, nicht aber die Hochvoltbatterie 2 von dem Steuergerät 4 trennen.

Der erste Schalter 15 kann bei fehlender erster Versorgungsspannung 13 durch die Hochvoltbatterie 2 eine Trennung der zweiten Verbindung 7 erwirken. Der erste Schalter 15 verbindet dann, wenn also die zweite Verbindung 7 getrennt ist, das Steuergerät 4 mit dem Zwischenkreis 6.

Die zweite Verbindung 7 kann ausschließlich durch das Steuergerät 4 wieder hergestellt werden. Der erste Schalter 15 wird also ausschließlich durch das Steuergerät 4 über einen Steuerbefehl 23 betätigt.

Das Steuergerät 4 umfasst einen System-Basis-Chip 29. Eine Kommunikation der Steuerungsanordnung 1 mit dem Kraftfahrzeug 3 erfolgt über den System-Basis-Chip 29 über CAN 34. Der System-Basis-Chip 29 weist LDO (low dropout) -Regler auf. LDO-Regler können eine Ausgangsspannung regeln, wenn diese sehr ähnlich einer Eingangsspannung ist. Über die LDO-Regler kann ein Mikrocontroller 32 des Steuergeräts 4 über eine dritte Verbindung 33 mit einer vierten Versorgungsspannung 35 betrieben werden.

Der Mikrocontroller 32 ist das Kernbauteil des Steuergeräts 4 und steuert alle Abläufe innerhalb des Steuergeräts 4. Der Microcontroller 32 ist über einen Kommunikationskanal mit einem Analog-Frontend 31 verbunden. Über das Analog-Frontend 31 werden Zellspannungen sowie Packspannung und Packstrom der Hochvoltbatterie 2 erfasst.

Über den Mikrocontroller 32 ist die Schaltanordnung 8 betätigbar. Damit sind die erste Verbindung 5 und die zweite Verbindung 7, insbesondere unabhängig voneinander, durch die Betätigung des zweiten Schalters 36 bzw. des ersten Schalters 15, wiederherstellbar, der die erste Verbindung 5 schaltende zweite Schalter 36 und der die zweite Verbindung 7 schaltende erste Schalter 15 also ansteuerbar bzw. betätigbar.

Über das Steuergerät 4 bzw. den Mikrocontroller 32 kann im Betrieb der Hochvoltbatterie 2 kontinuierlich ein aktueller Ladezustand 16 der Hochvoltbatterie 2 ermittelt werden. Diese Ermittlung bzw. Erfassung kann anhand bekannter Verfahren erfolgen, z. B. Ruhespannungsmessung und Stromintegration und/oder über komplexe Zellmodelle.

Über das Steuergerät 4 bzw. den Mikrocontroller 32 kann insbesondere erfasst werden, wenn Grenzwerte 17, 18, 22, 28 des Ladezustands 16 unterschritten und/oder überschritten werden.

Durch das Steuergerät 4 kann, bei Verlassen eines für den normalen Betrieb der Hochvoltbatterie 2 vorgesehenen Ladezustandsbereichs (SOC-Betriebsbereich; state of charge-Betriebsbereich), eine Warnung an das Kraftfahrzeug 3 übertragen werden, z. B. über CAN 34. Zusätzlich oder alternativ kann ein Fehlereintrag z. B. in dem Steuergerät 4 erfolgen, z. B. in dem nichtflüchtigen Speicher 19 des Steuergeräts 4.

Über die Steuerungsanordnung 1 wird einerseits sichergestellt, dass bei ausreichender Energieversorgung durch die Hochvoltbatterie 2 das Steuergerät 4 mit der Hochvoltbatterie 2 verbunden ist. Dabei kann die Hochvoltbatterie 2 bei Unterschreiten eines ersten Grenzwerts 17 des Ladezustands 16 der Hochvoltbatterie 2 durch das Steuergerät 4 von dem Zwischenkreis 6 getrennt werden.

Weiter kann durch die Steuerungsanordnung 1 sichergestellt werden, dass das Steuergerät 4 bei Unterschreiten eines zweiten Grenzwerts 18 des Ladezustands 16 der Hochvoltbatterie 2 ebenfalls von der Hochvoltbatterie 2 getrennt wird. Dabei wird das Steuergerät 4 mit dem Zwischenkreis 6 verbunden, so dass das Steuergerät 4 z. B. von einem in dem Zwischenkreis 6 angeordneten Starter-Generator 25 mit einer ausreichenden dritten Versorgungsspannung 21 betrieben werden kann.

Gemäß Schritt a) des Verfahrens erfolgt ausgehend von dem ersten Zustand 9 der Schaltanordnung 8 ein Ermitteln eines aktuellen Ladezustands 16 der Hochvoltbatterie 2 durch das Steuergerät 4; und, wenn der aktuelle Ladezustand 16 einen zweiten Grenzwert 18 unterschreitet gemäß Schritt b) ein Herstellen des dritten Zustands 11.

Dabei erfolgt vor Schritt b) und gemäß Schritt i. ein Durchführen von Schritt a) und, wenn der aktuelle Ladezustand 16 einen ersten Grenzwert 17 unterschreitet, gemäß Schritt ii. ein Herstellen des zweiten Zustands 10, und gemäß Schritt iii. ein Durchführen von Schritt a) und, wenn der aktuelle Ladezustand 16 einen zweiten Grenzwert 18 unterschreitet gemäß Schritt iv. ein Durchführen von Schritt b).

Der zweite Grenzwert 18 ist geringer als der erste Grenzwert 17. Das Verfahren wird während einer Abnahme des Ladezustands 16 der Hochvoltbatterie 2 durchgeführt. Durch das Verfahren soll die Hochvoltbatterie 2 vor einer Tiefenentladung geschützt werden.

Gemäß Schritt ii. erfolgt ein Trennen der ersten Verbindung 5. Damit kann erreicht werden, dass die erste Verbindung 5, zwischen der Hochvoltbatterie 2 und dem Zwischenkreis 6 und den in dem Kraftfahrzeug 3 angeordneten Verbrauchern, unterbrochen wird, so dass die Hochvoltbatterie 2 über das Kraftfahrzeug 3 nicht weiter entladen wird.

Nach Schritt ii. ist die Hochvoltbatterie 2 nur noch mit dem Steuergerät 4 verbunden. Das Steuergerät 4 weist einen wesentlich geringeren Energiebedarf als das Kraftfahrzeug 3 auf. Das Kraftfahrzeug 3 ist weiter mit dem Steuergerät 4 verbunden bzw. kann mit dem Steuergerät 4 weiter kommunizieren, z. B. über CAN 34.

Wird ein zweiter Grenzwert 18 unterschritten, wird auch die zweite Verbindung 7 getrennt, d. h. auch das Steuergerät 4 wird von der Hochvoltbatterie 2 getrennt. Damit sind nach Schritt b) keine Verbraucher mehr an die Hochvoltbatterie 2 angeschlossen.

Unmittelbar vor Schritt b) wird in einem nichtflüchtigen Speicher 19 des Steuergeräts 4 ein Statussignal 20 gesetzt. Durch das Statussignal 20 wird der Status der Hochvoltbatterie 2 in dem Steuergerät 4 hinterlegt, so dass dieser Status aus dem Steuergerät 4 ausgelesen werden kann, z. B. über einen Servicestecker bzw. ein kraftfahrzeugexternes Servicegerät. Alternativ oder zusätzlich kann ein Statussignal 20 über CAN 34 an eine zentrale Steuerungseinheit 26 übermittelt werden. Mit dem Hinterlegen bzw. Übermitteln des Statussignals 20 kann eine Fehlerdiagnose der Hochvoltbatterie 2 auch nach einer völligen Entladung und/oder Schädigung der Hochvoltbatterie 2 erfolgen.

Nach Schritt b) wird das Steuergerät 4 nicht mehr über die Hochvoltbatterie 2 mit einer Spannung versorgt, so dass die Hochvoltbatterie 2 nicht weiter durch interne Elektronik der Steuerungsanordnung 1 entladen wird. Die Hochvoltbatterie 2 kann sich dann nur selbst entladen, wobei sich eine Selbstentladung z. B. im Bereich von höchstens 2 % des Nennladezustands pro Monat bewegt.

Die Steuerungsanordnung 1 stellt sicher, dass das Steuergerät 4 bei Unterschreiten eines zweiten Grenzwerts 18 des Ladezustands 16 der Hochvoltbatterie 2 von der Hochvoltbatterie 2 getrennt und mit dem Zwischenkreis 6 verbunden wird. Das Steuergerät 4 kann so von einem in dem Zwischenkreis 6 angeordneten Starter-Generator 25 mit einer ausreichenden dritten Versorgungsspannung 21 betrieben werden.

Nach der Durchführung von Schritt b) und nach einem Inbetriebnehmen des Kraftfahrzeugs 3 wird der Zwischenkreis 6 über das Kraftfahrzeug 3 mit einer dritten Versorgungsspannung 21 beaufschlagt.

Das Inbetriebnehmen des Kraftfahrzeuges 3 umfasst ein Einschalten der Zündung. Dabei wird eine zentrale Steuerungseinheit 26 geweckt und kann feststellen, dass die Hochvoltbatterie 2 nicht mehr mit der zentralen Steuerungseinheit 26, z. B. über CAN 34, kommuniziert.

Stellt die Steuerungseinheit 26 fest, dass eine Kommunikation nicht erfolgt, kann durch die zentrale Steuerungseinheit 26 eine Vorladung des Zwischenkreises 6 auf einen definierten Spannungswert durch den zweiten Spannungswandler 24, der in dem Zwischenkreis 6 angeordnet ist, initialisiert werden. Über die Verbindung mit dem Zwischenkreis 6 kann so das Steuergerät 4 der Steuerungsanordnung 1 mit einer dritten Versorgungsspannung 21 beaufschlagt werden. Die dritte Versorgungsspannung 21 beaufschlagt den ersten Spannungswandler 12, der das Steuergerät 4 dann mit der zweiten Versorgungsspannung 14 beaufschlagt. Die dritte Versorgungsspannung 21 entspricht hinsichtlich der Spannungswerte der ersten Versorgungsspannung 13.

Die Beaufschlagung des Steuergeräts 4 mit der dritten Versorgungsspannung 21 aus dem Zwischenkreis 6 ermöglicht die Wiederaufnahme der Kommunikation des Steuergeräts 4 mit der zentralen Steuerungseinheit 26. Damit können die Informationen der Hochvoltbatterie 2 an die zentrale Steuerungseinheit 26 übermittelt werden.

Über die Wiederaufnahme der Kommunikation des Steuergeräts 4 mit der zentralen Steuerungseinheit 26 kann der zweite Spannungswandler 24 zur Regelung der dritten Versorgungsspannung 21 eingestellt werden, so dass die dritte Versorgungsspannung 21 im Zwischenkreis 6 auf die erste Versorgungsspannung 13 der Hochvoltbatterie 2 geregelt wird. Nach dem Angleichen der dritten Versorgungsspannung 21 und der ersten Versorgungsspannung 13 kann die erste Verbindung 5 wieder geschlossen werden, so dass die Hochvoltbatterie 2 mit dem Zwischenkreis 6 verbunden wird.

Die Schaltanordnung 8 wird über das Steuergerät 4 betätigt und die Hochvoltbatterie 2 ist mit dem Zwischenkreis 6 über die erste Verbindung 5 verbunden. Der Steuerbefehl 23 für die Betätigung der Schaltanordnung 8 wird also über das Steuergerät 4 bzw. den Microcontroller 32 ausgelöst.

Eine im Zwischenkreis 6 vorliegende dritte Versorgungsspannung 21 wird, vor dem Verbinden der Hochvoltbatterie 2 mit dem Zwischenkreis 6, auf eine erste Versorgungsspannung 13 der Hochvoltbatterie 2 geregelt. Nach dem Herstellen der ersten Verbindung 5 erfolgt ein Laden der Hochvoltbatterie 2 über den Zwischenkreis 6.

Über das Steuergerät 4 kann ein aktueller Ladezustand 16 hergeleitet werden, z. B. anhand des zuletzt hinterlegten Statussignals 20 und unter Berücksichtigung der Selbstentladung der Hochvoltbatterie 2. Wenn über das Steuergerät 4 festgestellt wird, dass der Ladezustand 16 einen dritten Grenzwert 22 unterschreitet, wird ein Herstellen der ersten Verbindung 5 verhindert.

Eine Unterschreitung des dritten Grenzwerts 22 deutet darauf hin, dass die Hochvoltbatterie 2 zumindest teilweise geschädigt ist, ggf. irreversibel, so dass ein Herstellen der ersten Verbindung 5 dann verhindert wird. Das in dem Steuergerät 4 insbesondere bereits hinterlegte Statussignal 20 ermöglicht eine Diagnose des Fehlers der Hochvoltbatterie 2.

Nach Schritt b) wird das Steuergerät 4 mit der Hochvoltbatterie 2 über die zweite Verbindung 7 erst dann wieder verbunden, wenn die Hochvoltbatterie 2 einen Ladezustand 16 erreicht, der einen vierten Grenzwert 28 überschreitet. Die zweite Verbindung 7, also die Verbindung zwischen der Hochvoltbatterie 2 und dem Steuergerät 4, also der erste Zustand 9, wird also erst dann wieder hergestellt, wenn die Hochvoltbatterie 2 einen ausreichenden Ladezustand 16 erreicht, der die Versorgung des Steuergeräts 4 mit der ersten Versorgungsspannung 13 gewährleisten kann. Die zweite Verbindung 7 wird durch das Steuergerät 4 wieder hergestellt.

### Bezugszeichenliste

- 1: Steuerungsanordnung
- 2: Hochvoltbatterie
- 3: Kraftfahrzeug
- 4: Steuergerät
- 5: erste Verbindung
- 6: Zwischenkreis
- 7: zweite Verbindung
- 8: Schaltanordnung
- 9: erster Zustand
- 10: zweiter Zustand
- 11: dritter Zustand
- 12: erster Spannungswandler
- 13: erste Versorgungsspannung
- 14: zweite Versorgungsspannung
- 15: erster Schalter
- 16: Ladezustand
- 17: erster Grenzwert
- 18: zweiter Grenzwert
- 19: Speicher
- 20: Statussignal
- 21: dritte Versorgungsspannung
- 22: dritter Grenzwert
- 23: Steuerbefehl
- 24: zweiter Spannungswandler
- 25: Riemen-Starter-Generator
- 26: Steuerungseinheit
- 27: Teilnetz
- 28: vierter Grenzwert
- 29: System-Basis-Chip
- 30: Masse
- 31: Analog-Frontend
- 32: Mikrocontroller
- 33: dritte Verbindung
- 34: CAN
- 35: vierte Versorgungsspannung
- 36: zweiter Schalter

## Patentansprüche

1. Steuerungsanordnung (1) für eine Hochvoltbatterie (2) in einem Kraftfahrzeug (3), zumindest umfassend eine Hochvoltbatterie (2) sowie ein Steuergerät (4) für die Hochvoltbatterie (2); wobei die Hochvoltbatterie (2) über eine schaltbare elektrische erste Verbindung (5) mit einem elektrischen Zwischenkreis (6) des Kraftfahrzeugs (2) und über eine schaltbare elektrische zweite Verbindung (7) mit dem Steuergerät (4) verbunden ist; wobei die Steuerungsanordnung (1) eine Schaltanordnung (8) aufweist, durch die die erste Verbindung (5) und die zweite Verbindung (7) schaltbar sind, so dass in einem ersten Zustand (9) der Schaltanordnung (1) die Hochvoltbatterie (2) mit dem Zwischenkreis (6) und das Steuergerät (4) mit der Hochvoltbatterie (2) verbunden sind; wobei in einem zweiten Zustand (10) die Hochvoltbatterie (2) von dem Zwischenkreis (6) getrennt und das Steuergerät (4) mit der Hochvoltbatterie (2) verbunden ist und in einem dritten Zustand (11) das Steuergerät (4) von der Hochvoltbatterie (2) getrennt und mit dem Zwischenkreis (6) verbunden ist.

2. Steuerungsanordnung (1) nach Patentanspruch 1, wobei das Steuergerät (4) über einen ersten Spannungswandler (12) mit der Hochvoltbatterie (2) verbunden ist, wobei eine durch den ersten Spannungswandler (12) erzeugte zweite Versorgungsspannung (14) geringer ist als eine erste Versorgungsspannung (13), die durch die Hochvoltbatterie (2) für den ersten Spannungswandler (12) und den Zwischenkreis (6) bereitgestellt ist; wobei in dem dritten Zustand (11) das Steuergerät (4) über den ersten Spannungswandler (12) mit dem Zwischenkreis (6) verbunden ist.

3. Steuerungsanordnung (1) nach einem der vorhergehenden Patentansprüche, wobei die Schaltanordnung (8) einen ersten Schalter (15) aufweist, durch den das Steuergerät (4) entweder mit der Hochvoltbatterie (2) oder mit dem Zwischenkreis (6) verbindbar ist.

4. Verfahren zum Betreiben einer Steuerungsanordnung (1) für eine Hochvoltbatterie (2) in einem Kraftfahrzeug (3), wobei die Steuerungsanordnung (1) zumindest eine Hochvoltbatterie (2) sowie ein Steuergerät (4) für die Hochvoltbatterie (2) umfasst; wobei die Hochvoltbatterie (2) über eine schaltbare elektrische erste Verbindung (5) mit einem elektrischen Zwischenkreis (6) des Kraftfahrzeugs (3) und über eine schaltbare elektrische zweite Verbindung (7) mit dem Steuergerät (4) verbunden ist; wobei die Steuerungsanordnung (1) eine Schaltanordnung (8) aufweist, durch die die erste Verbindung (5) und die zweite Verbindung (7) schaltbar sind, so dass in einem ersten Zustand (9) der Schaltanordnung (1) die Hochvoltbatterie (2) mit dem Zwischenkreis (6) und das Steuergerät (4) mit der Hochvoltbatterie (4) verbunden sind; wobei in einem zweiten Zustand (10) die Hochvoltbatterie (2) von dem Zwischenkreis (6) getrennt und das Steuergerät (4) mit der Hochvoltbatterie (2) verbunden ist und in einem dritten Zustand (11) das Steuergerät (4) von der Hochvoltbatterie (2) getrennt und mit dem Zwischenkreis (6) verbunden ist; wobei das Verfahren ausgehend von dem ersten Zustand (9) der Schaltanordnung (8) zumindest die folgenden Schritte umfasst:
a) Ermitteln eines aktuellen Ladezustands (16) der Hochvoltbatterie (2) durch das Steuergerät (4); und,
wenn der aktuelle Ladezustand (16) einen Grenzwert (17, 18) unterschreitet
b) Herstellen des dritten Zustands (11).

5. Verfahren nach Patentanspruch 4, wobei vor Schritt b) die folgenden Schritte durchgeführt werden:
i. Durchführen von Schritt a) und,
wenn der aktuelle Ladezustand (16) einen ersten Grenzwert (17) unterschreitet
ii. Herstellen des zweiten Zustands (10), und
iii. Durchführen von Schritt a) und,
wenn der aktuelle Ladezustand (16) einen zweiten Grenzwert (18) unterschreitet
iv. Durchführen von Schritt b).

6. Verfahren nach einem der vorhergehenden Patentansprüche 4 und 5, wobei unmittelbar vor Schritt b) in einem nichtflüchtigen Speicher (19) des Steuergeräts (6) ein Statussignal (20) gesetzt wird.

7. Verfahren nach einem der vorhergehenden Patentansprüche 4 bis 6, wobei nach der Durchführung von Schritt b) und nach einem Inbetriebnehmen des Kraftfahrzeugs (3) der Zwischenkreis (6) über das Kraftfahrzeug (3) mit einer dritten Versorgungsspannung (21) beaufschlagt wird.

8. Verfahren nach Patentanspruch 7, wobei über das Steuergerät (4) die Schaltanordnung (8) betätigt und die Hochvoltbatterie (2) mit dem Zwischenkreis (6) über die erste Verbindung (5) verbunden wird.

9. Verfahren nach Patentanspruch 8, wobei eine im Zwischenkreis (6) vorliegende dritte Versorgungsspannung (21), vor dem Verbinden der Hochvoltbatterie (2) mit dem Zwischenkreis (6), auf eine erste Versorgungsspannung (13) der Hochvoltbatterie (2) geregelt wird.

10. Verfahren nach einem der vorhergehenden Patentansprüche 8 und 9, wobei nach Schritt b) das Steuergerät (4) mit der Hochvoltbatterie (2) über die zweite Verbindung (7) erst dann wieder verbunden wird, wenn die Hochvoltbatterie (2) einen Ladezustand (16) erreicht, der einen dritten Grenzwert (22) überschreitet.
